# EUROPÄISCHE PATENTANMELDUNG

(11) **EP 1 964 827 A2**
(43) Veröffentlichungstag der Anmeldung: **03.09.2008**
(21) Anmeldenummer: 08100908.6
(22) Anmeldetag: 25.01.2008
(51) Int. Cl.: C04B 41/87, C04B 41/89, F23Q 7/00

(54) **Korrosionsbeständiger Keramikverbund und Verfahren zu dessen Herstellung**

(30) Priorität: 08.02.2007 DE 102007006327
(71) Anmelder: ROBERT BOSCH GMBH, 70442 Stuttgart (DE)
(72) Erfinder: Liemersdorf, Susanne, 70839, Gerlingen (DE)

(57) **Zusammenfassung**

Die Erfindung betrifft einen korrosionsbeständigen Keramikschichtverbund bestehend aus mindestens zwei keramischen Schichten wobei auf einem Nichtoxidkeramik-Substrat mindestens eine chemisch gebundene keramische Schicht angeordnet ist, sowie ein Verfahren zur Herstellung eines solchen korrosionsbeständigen Keramikschichtverbundes.

## Beschreibung

Die vorliegende Erfindung betrifft einen korrosionsbeständigen Keramikschichtverbund bestehend aus mindestens zwei keramischen Schichten sowie ein Verfahren zu dessen Herstellung.

### Stand der Technik

Nichtoxidkeramiken zeichnen sich gegenüber den Oxidkeramiken durch einen höheren Anteil kovalenter Bindungen aus. Diese ermöglichen durch die starken Bindungsenergien hohe chemische und thermische Stabilität, sorgen für einen hohen Elastizitätsmodul und verleihen große Festigkeit und Härte. Sie zeigen jedoch gleichzeitig eine geringere Duktilität und eine recht hohe Sprödigkeit.

Technisch bedeutende Nichtoxidkeramiken sind unter anderem Siliziumnitrid (Si₃N₄), Siliziumcarbid, und Aluminiumnitrid. Siliziumnitrid spielt unter den Nitridkeramiken eine besondere Rolle. Siliziumnitride verfügen über eine Kombination von hervorragenden Werkstoffeigenschaften, die extremsten Einsatzbedingungen gerecht werden können. Siliziumnitridkeramiken sind daher prädestiniert für Maschinenbauteile mit sehr hohen dynamischen Beanspruchungen und Zuverlässigkeitsanforderungen und werden als Hochtemperatur-Werkstoff im Maschinenbau eingesetzt. Beispiele für Einsatzgebiete von Siliziumnitrid Keramiken sind Glühstiftkerzen im Motorraum von Kraftfahrzeugen, Heizelemente, Produkte in der Metallbearbeitung mit Schneidwerkstoffen (Wendeschneidplatten), die Wälzlagertechnik mit Kugeln, Rollen und Ringen und der Maschinenbau mit hoch belasteten Maschinenelementen wie im Motoren- oder Turbinenbau. Der Einzug solcher Teile auch in den Bereichen der Umformtechnik demonstriert die Leistungsfähigkeit dieser Werkstoffe.
Trotz der erfolgreichen Anwendung in vielen Bereichen kann es zu Problemen beim Einsatz der Nichtoxid-Keramiken kommen, insbesondere in heißen aggressiven Medien. Ihre Sprödigkeit und offene Porosität macht die Nichtoxid-Keramiken hochtemperaturoxidationsempfindlich. Durch korrosive Angriffe können beispielsweise Materialdegeneration, Festigkeitsverlust, Risse und Brüche auftreten und damit zu einem schnelleren Verschleiß der Bauteile und Komponenten führen. Um die Betriebssicherheit solcher keramischer Komponenten zu erhöhen und ihre Haltbarkeit und Standzeit zu verbessern müssen diese wirksam vor Korrosion geschützt werden.
Nichtoxidkeramiken unterliegen bei hohen Temperaturen in sauerstoffhaltiger Atmosphäre Oxidationsprozessen. So bilden beispielsweise Siliziumnitridsubstrate an Ihrer Oberfläche eine Siliziumoxidschicht aus, die als Diffusionsbarriere zunächst eine Passivierung bewirkt. Diese Passivierungsschicht reicht für einen wirksamen längerfristigen Korrosionsschutz jedoch nicht aus. Auch keramische Komponenten aus Si₃N₄ sind daher gerade im Einsatz in aggressiven Medien keineswegs ausreichend geschützt. Zur Erhöhung der Haltbarkeit und der Verlängerung der Standzeit solcher Komponenten müssen diese daher durch zusätzliche Maßnahmen wirksam vor Korrosion geschützt werden.

Eine herkömmliche Verbindungsmethode für Keramikteile ist das Kleben. Grundsätzlich können durch diese Technik gleiche und verschiedenartige Werkstoffe miteinander verknüpft werden. Für Keramik-Keramik-Verbindungen ist diese Methode besonders vorteilhaft, da Kleben keine ausgeprägten Spannungsspitzen hervorruft. Klebeverbindungen sind meist auch gas- und flüssigkeitsdicht und besitzen gute mechanische Dämpfungseigenschaften. Wesentlicher Nachteil von Klebeverbindungen ist ihre begrenzte thermische Belastbarkeit sowie das gleichmäßige Aufbringen der Schicht auf komplexe Formkörper. Daher ist die Aufbringung einer keramischen Korrosionsschutzschicht auf ein keramisches Substrat mittels einer Klebeverbindung für den Bereich der Hochtemperaturanwendungen gänzlich ungeeignet.

Bei Metallen ist bekannt, dass deren Oberflächen mittels Plasmasprühverfahren mit keramischen Schutzschichten versehen werden können. Hierbei wird ein Gas-Strom aus hochenergetischem Plasma, einem ionisierten und dissoziierten Gas, erzeugt (ca. 12000 K), dem das Beschichtungsmaterial in Pulverform zugeführt wird. Dieses schmilzt und wird vom Gasstrom auf die Oberfläche des Beschichtungsgutes geschleudert, wo es sofort erstarrt. Durch die extremen Temperaturen können nahezu alle Werkstoffe, wie Metallpulver und auch hochschmelzende Keramikpulver als Beschichtungsmaterial verwendet werden. Das Verfahren ist besonders geeignet zur Herstellung harter Schutzschichten mit definierter Dicke. Das Verfahren kann bei Normaldruck (air plasma spraying - APS) oder im Vakuum unter Schutzgas (vacuum plasma spraying - VPS) durchgeführt werden.
Die Metalle müssen vor einer solchen Plasmabehandlung jedoch, beispielsweise durch Sandstrahlen, aufgeraut und gereinigt werden.

Eine solche extreme Vorbehandlung ist bei Keramiken nur mit Problemen durchführbar, da hierbei die Gefahr besteht Verunreinigungen und Defekte in das Substrat einzubringen, die wiederum die Anfälligkeit für Risse und Korrosion verstärken. Die Haftung von keramischen Schutzschichten über eine rein mechanische Anbindung und/oder physikalische Wechselwirkungen, beispielsweise durch Van-der-Waals Kräfte, auf keramischen Substraten ist nicht ausreichend, da die Grenzflächen eine Sollbruchstelle bilden. Der harte Übergang zwischen den Materialien eines keramischen Substrats und einer keramischen Korrosionsschutzschicht bewirkt eine schlechte Temperaturwechselbeständigkeit und ein Abplatzen der Schutzschicht.

In Journal of Material Science 29, (1994), 1436-1440 ist beschrieben, dass eine gute Haftung einer Aluminiumschicht auf einem Si₃N₄-Keramiksubstrat mittels einem Plasmasprühverfahren mit Aluminiumpulver erreicht werden konnte. Hierbei wurde Argon als erstes und Wasserstoff als zweites Plasmagas eingesetzt. Metallische Schichten kommen als Korrosionsschicht für Keramiken jedoch nicht in Frage, da sie selbst deutlich korrosionsanfälliger sind als die Keramikmaterialien selbst. Dies gilt insbesondere für die Nichtoxid-Keramikmaterialien, die im Hochleistungs- und Hochtemperaturbereichen verwendet werden.

### Offenbarung der Erfindung

Erfindungsgemäß wird vorgeschlagen auf die Oberfläche eines Nichtoxid-Keramik-Substrats zur Erhöhung der Korrosionsbeständigkeit mindestens eine chemisch gebundene Schicht aus einer weiteren Keramik aufzubringen. Diese chemisch gebundene Schicht kann zusätzlich auch mechanisch auf dem Nichtoxid-Keramik-Substrat gebunden sein.

Als Nichtoxidkeramik Substrate können erfindungsgemäß solche aus BN, TiN, TiAlN, A1N, Sialonen, SiC und Si₃N₄ eingesetzt werden. Bevorzugt werden erfindungsgemäß Substrate aus SiC und Si₃N₄ eingesetzt.

Unter dem Begriff Nichtoxid-Keramik werden erfindungsgemäß auch Nichtoxid-Keramikmaterialien verstanden, die mit ein oder mehreren Zusätzen dotiert oder versetzt sein können. Die Zusätze können beispielsweise ausgewählt sein aus der Gruppe Al₂O₃, MgO, Yb₂O_{3,} Y₂O₃ und andere Seltenerdoxide, die zum Beispiel als Sinteradditive bei der Herstellung eingesetzt werden. Mit solchen Additiven können die Eigenschaften des keramischen Materials beeinflusst und verbessert werden. Solche Materialsysteme haben sich insbesondere auch für Hochtemperaturanwendungen bewährt.

Erfindungsgemäß kann auf das Nichtoxid-Keramik Substrat eine chemisch gebundene keramische Schicht aus Al₂O_{3,} A1N, Seltenerdsilikate, wie Y₂O₃*SiO₂ oder Y₂O₃*SiO₂, Seltenerdoxiden, Si₃N₄, Mullit, Cordierit oder Alumosilikate aufgebracht sein. Diese auf das Substrat direkt aufgebrachte Schicht wird erfindungsgemäß auch als erste keramische Schicht bezeichnet. Unter dem Begriff chemisch gebunden wird erfindungsgemäß verstanden, dass ionische und/oder kovalente Bindungen zwischen den Schichten ausgebildet werden. Zusätzlich kann die Schicht auch mechanisch an das Substrat gebunden sein.

Die zusätzliche chemische Bindung der keramischen Haftschicht bietet gegenüber einer rein mechanischen Anbindung und physikalischen Wechselwirkungen den Vorteil, dass eine Zerrüttung der Verbindung zwischen Substrats und der ersten keramischen Schicht deutlich mehr Energie erfordert und ein Rissfortschritt im Keramikgefüge deutlich verzögert werden kann. Die erfindungsgemäße Verbindung kann bevorzugt derart gestaltet sein, dass im Übergang von der Substratoberfläche zur ersten keramischen Schicht eine gleitende Anpassung von Wärmedehnung und elastischen Konstanten erreicht wird. Vorteilhafterweise können durch die erfindungsgemäße Erzeugung eines fließenden Übergangs in den Materialieneigenschaften das Abplatzen der Korrosionsschutzschicht verhindert werden. Dies ermöglicht eine deutlich verbesserte Verschleißfestigkeit und verlängerte Haltbarkeit des Substrats.

Das keramische Material der ersten keramischen Schicht wird zusätzlich erfindungsgemäß so ausgewählt, dass die Materialeigenschaften möglichst ähnlich sind. Insbesondere die Wärmeausdehnungskoeffizienten des Substratmaterials und der keramischen ersten Schicht können erfindungsgemäß angenähert sein. Durch diese Auswahl wird zusätzlich verhindert, dass zwischen den Schichten zu große Spannungen auftreten, insbesondere bei häufigen und extremen Thermowechselbelastungen. Auf diese Weise können erfindungsgemäß Gradienten-Keramikverbundsysteme bereitgestellt werden, die eine hohe Festigkeit und eine ausgezeichnete Temperaturwechselbeständigkeit aufweisen.

Die keramische erste Schicht kann eine Dicke vorzugsweise im Bereich von 2 µm bis 1 mm besonders bevorzugt von 2 µm bis 100 µm aufweisen.

In einer weiteren Ausgestaltung der Erfindung kann auf der ersten keramischen Schicht eine weitere chemisch gebundene zweite keramische Schicht aufgebracht sein, die gleichzeitig auch mechanisch angebunden sein kann. Diese Außenschicht kann aus dem gleichen oder einem unterschiedlichen keramischen Material wie die erste keramische Schicht bestehen. Die erste keramische Schicht kann vorteilhafterweise als Haftvermittlungsschicht zwischen dem Substrat und der zweiten Schicht wirken. Durch die zweite Schicht kann die Korrosionsbeständigkeit des Substrates nochmals deutlich erhöht werden.

Die zweite keramische Schicht kann eine Dicke im Bereich von 2 µm bis 1 mm vorzugsweise von 20 µm bis 100 µm aufweisen. Die zweite keramische Schicht kann vorzugsweise dicker ausgestaltet sein als die erste keramische Schicht.
Die erste und die zweite keramische Schicht werden erfindungsgemäß beide auch als Korrosionsschutzschichten bezeichnet.

Die Schichtenabfolge vom Substrat bis zur Außenschicht im korrosionsbeständigen Keramikverbund kann erfindungsgemäß so ausgestaltet sein, dass sich an den Übergängen der Schichten ein optimaler Gradient in den Materialeigenschaften ergibt, insbesondere in den Wärmeausdehnungskoeffizienten. Durch fließende Übergänge in den Materialeigenschaften können Spannungen zwischen den Schichten und ein Abplatzen der Korrosionsschutzschichten verhindert oder zumindest vermindert werden. Der erfindungsgemäße Keramikschichtverbund weist somit eine hervorragende Korrosions- und Verschleißbeständigkeit auf.

Weiterer Gegenstand der vorliegenden Erfindung ist ein Verfahren zur Herstellung eines korrosionsbeständigen Keramikverbundes aus mindestens zwei keramischen Schichten.

Das erfindungsgemäße Verfahren basiert auf dem bekannten atmosphärischen Plasmasprüh-Prozess (APS).
Als Nichtoxid-Keramik Substrate können erfindungsgemäß die oben genannten Substrate eingesetzt werden.
Dem Plasmagas kann erfindungsgemäß gezielt ein reduzierendes Gas zugesetzt werden. Vorzugsweise wird Argon oder Helium als Plasmagas verwendet, dem erfindungsgemäß 0 - 5 % Wasserstoff zugesetzt wird.
Vorteilhafterweise kann durch die gezielte Zugabe von reduzierenden Gasen zum Plasmagas von der Substratoberfläche zunächst eine möglicherweise vorhandene Oxidschicht entfernt werden. Erfindungsgemäß ist eine geringere Rauhigkeit der Substratoberfläche notwendig als ohne die erste Keramikschicht. Eine aufrauende und reinigende Vorbehandlung der Substratoberfläche kann daher beispielsweise mit deutlich weniger Druck oder mit kleineren Partikeln erfolgen. Somit können hierdurch verursachte Defekte und Schädigungen des Substrates verringert oder sogar vermieden werden.
Im gleichen Prozessschritt kann erfindungsgemäß auf das nahezu oxidfreie Substrat eine erste Schicht aus dem keramischen Material aufgebracht werden. Als pulverförmiger Beschichtungszusatz können dem Plasmagas zu diesem Zweck erfindungsgemäß alle metallischen oder keramischen Materialien zugesetzt werden, die auf dem Substrat eine keramische Korrosionsschicht bilden oder in eine solche keramische Korrosionsschicht überführt werden können. Dies sind beispielsweise Aluminiumpulver, das durch Nitrierung mit Stickstoff in A1N überführt werden kann, Al₂O₃, Si₃N_{4,} Cordierit, Mullit oder Alumosilikate.
Der Beschichtungszusatz wird erfindungsgemäß so ausgewählt, dass die resultierende erste keramische Schicht möglichst ähnliche Materialeigenschaften, insbesondere einen ähnlichen Wärmeausdehnungskoeffizienten zu dem keramischen Material des Substrats aufweist. Vorteilhafterweise wird durch einen fließenden Übergang in den Materialieneigenschaften das Abplatzen der Korrosionsschutzschicht verhindert. Dies ermöglicht eine deutlich verbesserte Korrosions- und Verschleißfestigkeit sowie über eine verbesserte Temperaturwechselbeständigkeit eine verlängerte Haltbarkeit des Substrats.
In einer bevorzugten Ausgestaltung wird das Substrat vor oder während der Beschichtung mit der Haftschicht und/oder Korrosionsschicht erhitzt. Besonders bevorzugt wird das Substrat über Kristallisationstemperatur des Beschichtungsmaterials erhitzt. Durch die Erhitzung des Substrats wird die Bildung der chemischen Verbindung zwischen der Substratoberfläche und der Haftschicht positiv beeinflusst und verstärkt. Zusätzlich kann am Übergang von der Substratoberfläche zur Haftschicht durch Diffusion ein Gradient in den Materialeigenschaften erzeugt werden, der die Temperaturwechselbeständigkeit des resultierenden Keramikverbundes deutlich erhöht.

In einer weiteren Ausgestaltung der Erfindung kann die im ersten Prozessschritt erzeugte keramische Schicht vorteilhafterweise als Haftvermittlerschicht für die Aufbringung und Haftung einer weiteren Korrosionsschutzschicht an ihrer Oberfläche wirken. Diese zweite Korrosionsschutzschicht kann dicker sein als die chemisch gebundene erste Korrosionsschutzschicht. Die Korrosionsbeständigkeit des Substrats kann hierdurch nochmals verbessert werden.

Die durch das erfindungsgemäße Verfahren hergestellten Korrosionsschutzschichten, insbesondere die äußere zur Umgebung gerichtete Schicht, können sehr dicht sein und eine geringe Porosität besitzen. Diese Eigenschaften tragen vorteilhaft dazu bei das Substrat vor Korrosion und Oxidation, speziell bei hohen Temperaturen, zu schützen.
In einer besonders bevorzugten Ausgestaltung der vorliegenden Erfindung wird ein Si₃N₄ Substrat eingesetzt. Als Plasmagas kann Argon verwendet werden, dem Wasserstoff zugesetzt wird. Durch die reduzierende Wirkung des Wasserstoffes kann eine vorhandene Siliziumoxidschicht entfernt werden. Im gleichen Prozessschritt wird Aluminiumpulver gleichmäßig auf das Substrat aufgesprüht. Erfindungsgemäß bevorzugt liegt die Substrattemperatur hierbei kurz über der Kristallisationstemperatur von Aluminium. Hierdurch entsteht eine Übergangsschicht an der Oberfläche des Substrats in der das Si₃N₄ an Stickstoff verarmt, während gleichzeitig dieser Stickstoff in die aufgebrachte Aluminiumschicht eingebaut wird. Dadurch entsteht eine dichte, dünne erste Aluminiumnitrid-Schicht an der Oberfläche des Substrats. Die aufgebrachte Aluminiumnitrid-Schicht kann im folgenden Prozessschritt als Haftvermittlerschicht wirken. In einem weiteren Schritt kann erfindungsgemäß das Aufbringen einer weiteren Korrosionsschicht auf die Haftvermittlerschicht ebenfalls mittels APS erfolgen. Als Beschichtungszusatz kann wiederum Aluminiumpulver zugesetzt werden. Die entstehende Aluminiumschicht kann durch den Zusatz von Stickstoff in einem thermischen Prozess nitriert und damit in eine zweite Aluminiumnitrid-Schicht überführt werden. In einer weiteren Ausgestaltung kann die Haftvermittlerschicht mit Aluminiumpulver und Stickstoff oder einem Gemisch aus Stickstoff Argon und/oder Helium als Plasmagas einer Plasmabeschichtung unterworfen werden. Die zweite Schicht ist vorzugsweise dicker ausgestaltet als die erste Aluminiumnitrid-Schicht. Diese zweite Korrosionschutzschicht zeigt neben ihrer schützenden Wirkung gegen korrosive Medien auch im Hochtemperaturbereich eine sehr gute Haftung. Der erfindungsgemäß erzeugte Keramikverbund weist eine hervorragende Thermowechselbeständigkeit auf.
Ein anderer erfindungsgemäßer Keramikverbund kann beispielsweise durch folgende Schritte hergestellt werden. Auf ein Si₃N₄-basiertes Substrat, das wie oben beschrieben mit einer AIN-Haftschicht beschichtet wurde, kann als zweite Korrosionsschutzschicht eine Al₂O₃-Schicht oder Mullitschicht mittels Plasmasprühen aufgebracht werden. Als Plasmagas kann Argon verwendet werden, dem Wasserstoff zugesetzt wird. Durch die reduzierende Wirkung des Wasserstoffes kann eine vorhandene Siliciumoxidschicht auf dem Substrat entfernt werden. Im gleichen Prozessschritt kann das Aluminiumoxidpulver oder Mullitpulver als Schicht auf das Substrat aufgesprüht werden und die zweite Aluminiumoxid- oder Mullit-Schicht bilden. Diese Schichten zeigen jeweils eine schützende Wirkung gegen korrosive Medien auch im Hochtemperaturbereich und der gefertigte Keramikverbund weist eine hervorragende Thermowechselbeständigkeit auf.
Der erfindungsgemäße korrosionsbeständige Keramikverbund kann vorteilhaft als Hochtemperatur-Werkstoff im Maschinenbau eingesetzt werden. Besonders bevorzugt kann er für Glühstiftkerzen im Motorraum von Kraftfahrzeugen verwendet werden. Vorteilhafterweise kann der erfindungsgemäße Keramikverbund die besonders hohen Anforderungen an die Materialien, insbesondere im Hinblick auf die Thermowechselbeständigkeit erfüllen. Andere Beispiele für eine Verwendung des erfindungsgemäßen Keramikverbundes sind Heizelemente, Produkte in der Metallbearbeitung mit Schneidwerkstoffen (Wendeschneidplatten) und andere hoch belastete Maschinenelemente.

## Patentansprüche

1. Korrosionsbeständiger Keramikschichtverbund bestehend aus mindestens zwei keramischen Schichten **dadurch gekennzeichnet, dass** auf einem Nichtoxid-Keramik-Substrat mindestens eine chemisch gebundene keramische Schicht angeordnet ist.

2. Keramikschichtverbund nach Anspruch 1 **dadurch gekennzeichnet, dass** das Nichtoxidkeramik-Substrat aus BN, AIN, TiN, TiAIN, Sialonen, SiC oder Si₃N₄, bevorzugt SiC, besonders bevorzugt aus Si₃N₄ gefertigt ist.

3. Keramikschichtverbund nach Anspruch 1 oder 2 **dadurch gekennzeichnet, dass** die erste keramische Schicht auf dem Nichtoxidkeramik-Substrat aus Al₂O₃, AIN, Seltenerdsilikat, Mullit, Cordierit, oder Alumosilikat besteht.

4. Keramikschichtverbund nach einem der vorhergehenden Ansprüche **dadurch gekennzeichnet, dass** auf der ersten keramischen Schicht eine zweite mechanisch und/oder chemisch gebundene Schicht aus keramischem Material angeordnet ist.

5. Keramikschichtverbund nach einem der vorhergehenden Ansprüche **dadurch gekennzeichnet, dass** die zweite keramische Schicht aus AIN, Al₂O_{3,} Si₃N_{4,} Mullit, Seltenerdsilikat, Alumosilikat und /oder Cordierit besteht.

6. Verfahren zur Herstellung eines korrosionsbeständigen Keramikschichtverbunds nach einem der vorhergehenden Ansprüche **dadurch gekennzeichnet, dass** mittels einem atmosphärischem Plasmasprüh-Prozess mindestens eine chemisch gebundene Schicht aus keramischem Material auf der Oberfläche des Nichtoxid-Keramik-Substrats aufgebracht wird.

7. Verfahren nach Anspruch 6 **dadurch gekennzeichnet, dass** als Plasmagas Argon und/oder Helium mit einem Wasserstoffanteil von 0 bis 5 % verwendet wird.

8. Verfahren nach Anspruch 6 oder 7 **dadurch gekennzeichnet, dass** das Substrat aus BN, AIN, TiN, TiAlN, Sialonen, SiC und /oder Si₃N_{4,} bevorzugt SiC, besonders bevorzugt auf Si₃N₄ gefertigt ist.

9. Verfahren nach einem der Ansprüche 6 bis 8 **dadurch gekennzeichnet, dass** im Plasmasprüh-Prozess als pulverförmiger Beschichtungszusatz metallische oder keramische Materialien eingesetzt werden, die auf dem Substrat eine keramische Korrosionsschicht bilden oder in eine solche keramische Korrosionsschicht überführt werden können.

10. Verfahren nach Anspruch 9 **dadurch gekennzeichnet, dass** als pulverförmiger Beschichtungszusatz Aluminium, Al₂O₃, Si₃N₄, Seltenerdoxide, Seltenerdsilikate Alumosilikate A1N, Cordierit und/oder Mullit oder Mischungen hieraus eingesetzt werden

11. Verfahren nach einem der Ansprüche 6 bis 10 **dadurch gekennzeichnet, dass** das Substrat, bevorzugt über die Kristallisationstemperatur des Beschichtungsmaterials, erhitzt wird.

12. Verfahren nach einem der Ansprüche 6 bis 11 **dadurch gekennzeichnet, dass** auf der ersten aufgebrachten keramischen Schicht eine zweite chemisch gebundene keramische Schicht mittels eines Plasmasprüh-Prozesses aufgebracht wird.

13. Verwendung eines Keramikschichtverbundes nach einem der Ansprüche 1 bis 5 als Material für Glühkerzen in Motoren.
